Europäisches Patentamt

**European Patent Office**

Office européen des brevets

(19)

(11)  **EP 0 410 213 B2**

(12)  **NEUE EUROPÄISCHE PATENTSCHRIFT**

(45) Veröffentlichungstag und Bekanntmachung des
Hinweises auf die Entscheidung über den
Einspruch:
**07.01.1998  Patentblatt 1998/02**

(45) Hinweis auf die Patenterteilung:
**20.10.1993  Patentblatt 1993/42**

(21) Anmeldenummer: **90113303.3**

(22) Anmeldetag: **12.07.1990**

(51) Int. Cl.$^6$: **A01N 25/10**,  A01N 33/02,
A01N 33/12,  A01N 37/20,
B27K 3/34,  D06M 15/267

(54)  **Mikrobizid-Formulierungen und deren Verwendung**

Microbicidal formulations and their use

Formulations microbicides et leur utilisation

(84) Benannte Vertragsstaaten:
**DE FR GB IT**

(30) Priorität: **25.07.1989 DE 3924527**

(43) Veröffentlichungstag der Anmeldung:
**30.01.1991  Patentblatt 1991/05**

(73) Patentinhaber: **BAYER AG**
**51368 Leverkusen (DE)**

(72) Erfinder:
• **Dhein, Rolf, Dr.**
**D-4150 Krefeld (DE)**
• **Bäcker, Lothar, Dipl.-Ing.**
**D-4047 Dormagen 5 (DE)**
• **Exner, Otto, Dr.**
**D-4019 Monheim (DE)**
• **Radt, Walter, Dr.**
**verstorben (DE)**

• **Schmitt, Hans-Georg, Dr.**
**D-4150 Krefeld 1 (DE)**

(56) Entgegenhaltungen:
EP-A- 0 286 009          EP-A- 0 331 528
DE-A- 3 702 983          DE-C- 2 651 465
GB-A- 1 556 365          GB-A- 2 203 340
US-A- 3 580 853          US-A- 4 010 252

• **M. Kittel, Lehrbuch der Lacke und**
**Beschichtungen, Band III, 1976, W.A. Colomb,**
**Berlin, S. 280-293**
• **L.J. Calbo, Handbook of coating additives, 1986,**
**Marcel Dekker, New York, S.177-221**
• **Römpp-Chemie-Lexikon 1992, Stichwort**
**"Polymeren", Seite 3545-6**
• **Third meeting of OCDE Experts on Polymers,**
**Tokyo 14-16 April 1993, Chairman's Report**

**Beschreibung**

Die Erfindung betrifft die Verwendung von speziellen Polymeren, nämlich von in Wasser verteilbaren Polymeren, mit einem bestimmten Gehalt an chemisch gebundenen tertiären und/oder quartären Ammoniumgruppen, als Hilfsmittel für die Formulierung von Mikrobiziden, die mit diesen Polymeren hergestellten Mikrobizid-Formulierungen und die Verwendung dieser Formulierungen für den Schutz technischer Materialien.

Für die mikrobizide Ausrüstung technischer Materialien, z.B. Holz, Textilien, Leder und Papier werden heute vielfach Wirkstoffe eingesetzt, die zwar eine sehr gute mikrobizide Wirksamkeit aufweisen, die sich aber wegen ihrer Un- bzw. Schwerlöslichkeit in Wasser nur mit großen Schwierigkeiten in die in der Praxis verlangten wäßrigen Formulierungen überführen lassen und außerdem nicht hinreichend aufden zu schützenden Materialien haften. Solche schwierig in wäßrige Formulierungen überführbaren Wirkstoffe sind vor allem phenolische Mikrobizide wie o-Phenyphenol, p-Chlor-m-kresol, 5,5'-Dichlor-2,2'-dihydroxydiphenylmethan aber auch 2-Thiocyanatomethyl-thiobenzthiazol, Benzimidazolylmethylcarbamat (BCM), Methylenbisthiocyanat, TributylZinn-Salze, 3-Jodo-2-propinyl-butylcarbamat, 2-N-octyl-4-isothiazolin-3-on, $\alpha$-(Diethoxy-thiophosphoryloximino)phenylacetonitril, $\alpha$-[2-(4-Chlorphenyl)-ethyl]-$\alpha$-(1,1-dimethylethyl)-1H-1,2,4-triazol-1-ethanol (Tebuconazol) und die Mischungen dieser Wirkstoffe.

Um die Schwierigkeiten bei der Herstellung wäßriger Formulierungen zu überwinden, wurden die phenolischen Wirkstoffe bislang in Form wäßriger Lösungen ihrer Alkalisalze eingesetzt. Diese stark alkalischen Formulierungen - eine 1 %ige wäßrige Lösung des Na-Salzes des o-Phenylphenols weist einen pH-Wert von 11,3 auf - haben aber den Nachteil, daß sie stark ätzend wirken und deshalb ihre Anwendung aus Gründen der Arbeitssicherheit und -hygiene erhebliche Schutzmaßnahmen erfordert. Außerdem ist die Fixierung der Alkalisalze der phenolischen Wirkstoffe auf den zu schützenden Materialien unzureichend.

Außerdem haben die alkalischen Formulierungen den Nachteil, daß sie mit den für die Rottfestausrüstung von Textilmaterialien gleichzeitig verwendeten sauer reagierenden Hydrophobiermitteln unverträglich sind. Zum Aufbringen von Mikrobizid und Hydrophobiermittel ist deshalb ein aufwendiges Zweibadverfahren notwendig. Im ersten Bad wird das Textilmaterial mit der alkalischen Wirkstofformulierung behandelt. Nach dem Trocknen und Neutralisieren der Textilmaterialien mit Essigsäure werden diese in einem zweiten Bad mit dem sauren Hydrophobiermittel behandelt. Um dieses aufwendige Zweistufenverfahren zu umgehen, wurde deshalb versucht, die phenolischen Wirkstoffe durch Veresterung mit den sauren Hydrophobiermitteln verträglich zu machen (siehe DE-OS 30 31 933). Weiterhin haben die alkalischen Formulierungen den Nachteil, daß sie nicht erlauben, die phenolischen Wirkstoffe zusammen mit anderen nicht-phenolischen Mikrobiziden anzuwenden, da in den meisten Fällen die nicht-phenolischen Wirkstoffe nicht alkalibeständig sind.

Gemäß EP-A 286 009 besteht eine weitere Möglichkeit, schwerlösliche phenolische Mikrobizide in eine anwendbare Form zu bringen darin, Lösungen dieser Mikrobizide in organischen Lösungsmitteln in Kombination mit wäßrigen Lösungen oder Mischungen von polymeren Bindemitteln anzuwenden. Aus sicherheitstechnischen, ökologischen und praktischen Gründen (die Mikrobizide werden bei der Freibewetterung trotz ihrer Schwerlöslichkeit zu schnell aus den behandelten Materialien ausgewaschen) genügen diese Formulierungen jedoch den Ansprüchen der Praxis nicht. Das gleiche gilt für die in der DE-PS 30 04 248 beschriebenen Mikrobizid-Formulierungen, die zusätzlich zu den organischen Lösungsmitteln auch noch Emulgatoren enthalten.

Bei den in den DE-OS 30 04 319 und 30 04 249 beschriebenen Mikrobizid-Formulierungen wird zwar auf die Verwendung von organischen Lösungsmitteln für die Mikrobizide verzichtet und statt ihrer nichtionische Emulgatoren und kationische niedermolekulare Benetzungsmittel eingesetzt. Diese Formulierungen haben aber den Nachteil, daß sie beim Verdünnen mit Wasser nur bedingt stabile Emulsionen ergeben und vor allem, daß die auf die zu schützenden Materialien aufgebrachten Wirkstoffe zu schnell ausgewaschen werden.

Weiterhin ist bekannt, daß sowohl niedermolekulare quartäre Ammoniumverbindungen (siehe GB-A20 10 851) als auch hochmolekulare (polymere) quartäre Ammoniumverbindungen (siehe EP-A 286 009, 331 528 und 355 316, ferner Vysokomol. Soedin. 20(1978), Ser. B, Nr.1, S. 45-48) eine mikrobizide Wirkung aufweisen. Die mikrobizide Wirkung dieser monomolekularen und polymeren Ammoniumverbindungen ist aber, verglichen mit der mikrobiziden Wirkungen der phenolischen Mikrobizide nur gering und für einen wirkungsvollen Materialschutz völlig unzureichend. Hinzu kommt, daß diese quartären Ammoniumverbindungen wegen ihrer hohen Substantivität auf den zu schützenden Materialien, insbesondere Holz und anderen Zellulosematerialien, nicht hinreichend tief eindringen und sich außerdem auf den Oberflächen nur ungleichmäßig verteilen. Dieser sogenannte "Spottingeffekt" führt zu einer partiellen Anfälligkeit der mit den Ammoniumverbindungen behandelten Materialien gegen Mikroben.

Es bestand daher die Aufgabe, Hilfsmittel für die Herstellung wäßriger Formulierungen von in Wasser unlöslichen bzw. in Wasser schwerlöslichen Mikrobiziden, insbesondere phenolischen Wirkstoffen zu finden, mit deren Hilfe es gelingt, stabile wäßrige, nicht ätzend wirkende Mikrobizid-Formulierungen herzustellen, die ein gutes Eindringvermögen für die zu behandelnden Materialien aufweisen und die sich gleichmäßig auf den Oberflächen der behandelten Materialien verteilen und mitderen Hilfe es gelingt, die Wirkstoffe möglichstvollständig und dauerhaft auf den zu schützenden Materialien zu fixieren.

Überraschenderweise wurde gefunden, daß mit Hilfe von in Wasserverteilbaren Polymeren, die einen bestimmten Gehalt an chemisch gebundenen tertiären und/oder quartären Ammoniumgruppen aufweisen, stabile, wäßrige, neutrale bis schwach saure, einfach handhabbare Mikrobizid-Formulierungen erhalten werden, die das gewüschte Eindring- und Verteilungsvermögen aufweisen und mit deren Hilfe die gewünschte vollständige und dauerhafte Fixierung der formulierten Wirkstoffe auf den zu schützenden Materialien erreicht wird.

Die mit Hilfe dieser speziellen Polymere erhalten Formulierungen weisen überraschenderweise eine bezüglich Langzeitwirkung und Temperaturbeständigkeit wesentlich verbesserte mikrobizide Wirkung auf, verglichen mit der mikrobiziden Wirkung der zu formulierenden Wirkstoffe und der mikrobiziden Wirkung der bekannten quartäre Ammoniumgruppen enthaltenden Polymere. Weiterhin zeichnen sich die Formulierungen durch eine sehrgute Verträglichkeit mit den bei der Rottfestausrüstung von Textilmaterialien üblicherweise gebräuchlichen, sauer reagierenden Hydrophobiermitteln aus, so daß diese Formulierungen unmittelbar mit diesen und auch zusammen mit allen anderen Zusatz- und Hilfsstoffen in einem Einbadverfahren aufgebracht werden können.

Die Erfindung betrifft daher die Verwendung von in Wasser verteilbaren Polyurethanen oder Poly(meth)acrylaten erhalten aus Umsetzungsprodukten von Copolymerisaten aus Styrol, Methylmethacrylat, Glycidylmethacrylat und gegebenenfalls n-Butylacrylat mit 5 - 40 Gew.-% ungesättigtenFettsäuren und 5 bis 25 Gew.-% Diethylamin oder Dimethyl-(1-hydroxyethyl)-ammoniumacetat , alle Gew.-% jeweils bezogen auf das Gesamtgewicht des jeweils vorliegenden Polymerisates, wobei die Polymere jeweils einen Gehalt an chemisch gebundenen tertiären und/oder quartären Ammoniumgruppen von 70 - 500 meq je 100 g Polymer aufweisen, als Hilfsmittel für die Herstellung wasserhaltiger und mit Wasser verdünnbarer Formulierungen von mikrobiziden Wirkstoffen.

Die erfindungsgemäß als Formulierungs-Hilfsmittel zu verwendenden Polymere haben außer ihrer guten Emulgier- und Stabilisatorwirkung und ihrer vorteilhaften Eigenschaft, die Eindringtiefe, das Verteilungsvermögen und die Haftung der mikrobiziden Wirkstoffe auf und an den behandelten technischen Materialien wesentlich zu verbessern und damit Gleichmäßigkeit und Haltbarkeit der mikrobiziden Ausrüstung wirksam zu erhöhen, die weitere vorteilhafte Eigenschaft, daß die mit ihnen hergestellten Mikrobizid-Formulierungen das Aussehen der Oberflächen der behandelten technischen Materialien, z.B. von Holz, nur unwesentlich verändern.

Der Gehalt der erfindungsgemäß zu verwendenden Polymere an chemisch gebundenen tertiären und/oder quartären Ammoniumgruppen ist ausschlaggebend für die Emulgierwirkung der Polymere und die Eigenschaften der mit ihnen hergestellten Formulierungen. Bevorzugt weisen die erfindungsgemäß zu verwendenden Polymere einen Gehalt von 100 bis 400 meq an chemisch gebundenen tertiären und/oder quartären Ammoniumgruppen je 100 g Polymer auf.

Zusätzlich zu den 70 bis 500 meq an chemisch gebundenen tertiären und/oder quartären Ammoniumgruppen je 100 g Polymer können die erfindungsgemäß zu verwendenden Polymere auch noch chemisch gebundene Reste ein- oder mehrfach ungesättigter Fettsäuren aufweisen. Die Menge an chemisch gebundenen ein-oder mehrfach ungesättigten Fettsäureresten kann 5 bis 40 Gew.-%, bezogen auf das Gesamtgewicht des Polymer betragen.

Fettsäure-Reste aufweisende Polymere haben sich besonders für die Formulierungen von phenolischen Wirkstoffen für die mikrobizide Ausrüstung von Holz bewährt. Mit diesen Polymeren wird ein besonders gutes Eindringvermögen und damit eine wirksame Fixierung der Wirkstoffe auf und im Holz erreicht.

Besonders bevorzugt sind unter diesen Poly(meth)acrylaten die Umsetzungsprodukte von solchen Copolymerisaten, in denen der Anteil der einzelnen Monomere der folgende ist:

| Styrol: | 10-40 Gew.-% |
|---|---|
| Methylmethacrylat: | 5-20 Gew.-% |
| Glycidylmethacrylat: | 20-50 Gew.-% |
| n-Butylacrylat: | 0-10 Gew.-% |

alle Gew.-% bezogen auf das Gesamtgewicht des Copolymerisates.

Bevorzugt werden ferner solche Polymerisate mit besagtem Gehalt an chemisch gebundenen tertiären und/oder quartären Ammoniumgruppen als Poly(meth)acrylate verwendet, die durch Copolymerisation von Styrol, Methylmethacrylat, N,N-Dimethylaminoethylmethacrylat und gegebenenfalls n-Butylacrylat erhalten wurden; besonders bevorzugt sind solche Copolymerisate, in denen der Anteil der einzelnen Monomere folgender ist:

| Styrol: | 10-50 Gew.-% |
|---|---|
| Methylmethacrylat: | 5-30 Gew.-% |
| N,N-Dimethylaminoethylmethacrylat: | 20-60 Gew.-% |
| n-Butylacrylat: | 0-10 Gew.-% |

Diese erfindungsgemäß verwendbaren, in Wasser verteilbaren Polymerisate auf (Meth)Acrylat-Basis mit besagtem Gehalt an chemisch gebundenen tertiären und/oder quartären Ammoniumgruppen und gegebenenfalls chemisch gebundenen Resten ungesättigter Fettsäuren sind aufverschiedene Weise erhältlich. Man kann sie z.B. durch Umsetzung von Epoxidgruppen aufweisenden Poly(meth)acrylaten mit sekundären Aminen und/oder tertiären Aminsalzen oder aber durch unmittelbare Copolymerisation von (Meth)Acrylsäureestern mit tertiären Aminogruppen und/oder quartären Ammoniumgruppen aufweisenden (Meth)Acrylsäurederivaten (Estern, Amiden) und - bei Verwendung sekundärer Amine oder tertiäre Aminogruppen aufweisender (Meth)Acrylsäurederivate - nachfolgende Salzbildung durch Zugabe von Säuren herstellen. Die Herstellung der in Wasser verteilbaren Poly(meth)acrylate mit chemisch gebundenen tertiären Ammoniumgruppen und chemisch gebundenen Resten ungesättigter Fettsäuren ist in der DE-OS 3 738 932 beschrieben.

Die als Ausgangsverbindungen erforderlichen Epoxygruppen aufweisenden Poly(meth)acrylate sind bekannt und/oder nach bekannten Verfahren (siehe Houben-Weyl 4. Aufl. Bd. 14/1, S. 24 ff.) durch radikalische Co-polymerisation von (Meth)Acrylsäure-Derivaten wie Glycidyl(meth)acrylaten und (Meth)Acrylsäureestern wie Methylmethacrylat, Methylacrylat, n- und i-Butyl-, n-Hexyl-, Cyclohexyl-, 2-Ethylhexyl-, 2-Hydroxyethyl-, Hydroxypropyl-, 2-Ethoxyethyl- und 2-Butoxyethylmethacrylat erhältlich. Weiterhin können bei der Copolymerisation auch andere Monomere wie vinylisch ungesättigte Kohlenwasserstoffe wie Styrol und Vinyltoluol mitverwendet werden. Der Anteil dieser anderen Monomere in den Epoxygruppen enthaltenden Polymerisaten sollte 70 Mol-% nicht überschreiten und liegt vorzugsweise bei 5-60 Mol-% (Mol-% bezogen auf die Gesamtmolzahl der Monomere im Polymerisat). Das Molekulargewicht der Polymerisate liegt über 700, vorzugsweise bei 1.000 bis 20.000. Die Epoxidgruppen aufweisenden Poly(meth)acrylate sollten Epoxyäquivalentgewichte von 150 bis 1.300, vorzugsweise 150 bis 700, aufweisen.

Für die Herstellung der Polymerisate mit chemisch gebundenen Resten ungesättigter Fettsäuren werden z.B. diese Epoxygruppen aufweisenden Poly(meth)acrylate zunächst in einer Inertgasatmosphäre bei 80 bis 120°C mit einer den gewünschten Gehalt an ungesättigten Fettsäureresten entsprechenden Menge ungesättigter Fettsäuren und anschließend mit einer dem gewünschten Gehalt an tertiären und/oder quartären Ammoniumgruppen entsprechenden Menge an sekundären Aminen und/oder Salzen tertiärer Amine umgesetzt.

Die Fettsäuren reagieren mit den Epoxygruppen unter Bildung von Estergruppen. Die nach der Umsetzung noch verbliebenen Epoxygruppen werden anschließend durch Umsetzung mit den sekundären Aminen und/oder Salzen tertiärer Amine in die tertiären und/oder quartären Ammoniumgruppen umgewandelt.

Als ungesättigte Fettsäuren werden die bekannten natürlichen oder synthetischen, trocknenden Fettsäuren, die zwei oder mehr Doppelbindungen und bis zu 22, vorzugsweise 14 bis 18, C-Atome aufweisen, verwendet. Beispiele für solche Fettsäuren sind Linolsäure, Linolensäure, Eläostearinsäure, Parinarsäure, Arachidonsäure, Clupanodonsäure, Misinsäure, Ricinenfettsäure und Gemische konjugiert mehrfach ungesättigter Fettsäuren wie sie z.B. unter den Handelsnamen ®Prifac 7967, ®Prifac 7968 und ®Prifac 7969 angeboten werden. Bei den letztgenannten drei Säuregemischen handelt es sich um Gemische synthetischer, konjugiert ungesättigter $C_{18}$-Fettsäuren.

Für die Herstellung von Polymerisaten, die nur chemisch gebundene tertiäre und/oder quartäre Amoniumgruppen aufweisen, werden die Epoxygruppen enthaltenden Poly(meth)acrylate unmittelbar mit den dem gewünschten Gehalt an chemisch gebundenen tertiären und/oder quartären Ammoniumgruppen entsprechenden Mengen an sekundären Aminen und/oder Salzen tertiärer Amine umgesetzt.

Für die Herstellung der erfindungsgemäß zu verwendenden in Wasser verteilbaren Poly(meth)acrylate mit dem angegebenen Gehalt an chemisch gebundenen tertiären und/oder quartären Ammoniumgruppen haben sich besonders sekundäre Amine wie Dimethylamin, Diethylamin, Dipropylamin, Di-n-Butylamin, Diethanolamin und Diisopropanolamin und als Salze tertiärer Anne besonders die Salze, z.B. Acetate des Trimethylamins, Triethylamins, N,N-Dimethyl-ethanolamins, des N,N-Diethyl-ethanolamins, N-Methyl-diethanolamins, N-Butyl-diethanolamins, 3-Diethylamino-1-propanols, 1-Dimethylamino-2-popanols und Triethanolamins bewährt. Besonders vorteilhaft ist die Verwendung der Salze des N,N-Dimethylethanolamins, weil die daraus hergestellten quartäre Ammoniumgruppen aufweisenden Poly(meth)acrylate eine besonders gute Löslichkeit im Wasser aufweisen.

Die Umsetzung der Epoxygruppen aufweisenden Poly(meth)acrylate mit den sekundären Aminen und/oder Salzen tertiärer Amine wird vorzugsweise bei Temperaturen von 60 bis 100°C vorgenommen. Für die Herstellung tertiäre und quartäre Ammoniumgruppen aufweisenden Poly(meth)acrylate werden Gemische von sekundären Aminen und Salzen tertärer Amine eingesetzt. Während die durch Umsetzung mit den Salzen tertiärer Amine erhältlichen quartäre Ammoniumgruppen aufweisenden Polymerisate unmittelbar in Wasser löslich sind, müssen die durch Umsetzung mit den sekundären Aminen erhältlichen, tertiäre Aminogruppen aufweisenden Polymerisate durch Neutralisation mit Säuren wasserlöslich gemacht werden. Zur Neutralisation eignen sich insbesondere organische Carbonsäuren mit 1 bis 5 C-Atomen, wie Ameisensäure, Essigsäure, Propionsäure, Apfelsäure oder Dimethylolpropionsäure.

Die Herstellung der erfindungsgemäß zu verwendenden in Wasser verteilbaren Polymerisate mit besagtem Gehalt an chemisch gebundenen tertiären und/oder quartären Ammoniumgruppen durch Copolymerisation von tertiäre Aminogruppen und/oder quartäre Ammoniumgruppen enthaltenden (Meth)Acrylsäure-Derivaten und (Meth)Acrylsäureestern ist bekannt (siehe Houben-Weyl, 4. Aufl. Bd. 14/1, S. 24 ff.). Als Vertreter tertiäre Aminogruppen oder quartäre Ammoniumgruppen aufweisender (Meth)Acrylsäure-Derivate seien beispielsweise genannt: N,N-Dimethylaminoethylmethacrylat, N,N-Dimethylaminoprnpylmethacrylamid, 2-Trimethylammoniumethyl-methacrylatchlorid, N-Trimethylammoniumpropylmethacrylamidchlond. N,N-Dimethylaminoethyl-acrylat, 2-Trimethylammoniumethyl-acrylat-chlorid. Bei der Verwendung der bereits als Salz vorliegenden Monomeren ist eine anschließende Neutralisation des anfallenden Polymerisates nicht erforderlich. Die durch Copolymerisation erhaltenen Polymersalze sind unmittelbar mit Wasser verdünnbar. Im Gegensatz dazu müssen die tertiäre Aminogruppen aufweisenden Polymerisate vor dem Verdünnen mit Wasser mit Säuren, vorzugsweise organischen Säuren wie den vorstehend genannten $C_1$-$C_5$-Carbonsäuren neutralisiert werden.

Als erfindungsgemäß zu verwendende, in Wasser verteilbare, den besagten Gehalt an chemisch gebundenen tertiären und/oder quartären Ammoniumgruppen aufweisende Polymere eignen sich ferner Polykondensate vom Typ der Polyurethane.

Die Herstellung der Polyurethane mit chemisch gebundenen tertiären und/oder quartären Ammoniumgruppen erfolgt nach bekannten Verfahren (siehe Houben-Weyl, 4. Auflage, "Makromolekulare Stoffe", Teil 2, S. 1561 ff.) durch Polyaddition von gegenüber Isocyanaten reaktive Wasserstoffatome aufweisenden Komponenten wie Polyalkoholen, endständige OH-Gruppen aufweisende Polyester und Polyether unter Mitverwendung von tertiären Aminen mit einer oder mehreren Hydroxylgruppen unter der Maßgabe, daß die erfindungsgemäß erforderlichen Gehalte an chemisch gebundenen tertiären und/oder quartären Ammoniumgruppen 70 bis 500, bevorzugt 100 bis 400 meq je 100 g Polyurethan betragen.

Für die Herstellung der erfindungsgemäß zu verwendenden polyurethane eignen sich sowohl einstufige wie mehrstufige Verfahren. So können z.B. in der ersten Stufe durch Polykondensation von Polyolen und Polycarbonsäuren oder durch Polymerisation von Epoxiden wie Ethylenoxid, Propylenoxid, Butylenoxid und Tetrahydrofuran, mit endständigen Hydroxylgruppen ausgestattete Polyester oder Polyether hergestellt werden, die dann in Kombination mit hydroxylfunktionellen tertiären Aminen mit Polyisocyanaten zum Polyurethan umgesetzt werden.

Geeignete tertiäre Amine mit Hydroxylgruppen sind z.B. N-Methyldiethanolamin, N-Butyldiethanolamin, Bis-(2-hydroxypropyl)-methylamin, 2,2'-(9-Octadecenylimino)bisethanol, Triethanolamin, Tri-[2-(2-hydroxyethoxy)ethyl]-amin, Triisopropanolamin, 2-(Hydroxyethyl)-bis(2-hydroxypropyl)-amin, 2,2-Bis(hydroxymethyl)-N,N-dimethyl-1-butanamin.

Neben diesen Aminen mitmehreren Hydroxylgruppen können anteilsmäßig acyclische tertiäre Monoamine mit einer Hydroxylgruppe verwendet werden, wie z.B. N,N-Dimethylethanolamin, 2-[(2-Dimethylamino)ethoxy] ethanol, 2-(Diethylamino)ethanol, 2-[(2-Diethylamino)ethoxy]-ethanol und 2-(Dibutylamino)ethanol. Diese Aufzählung der geeigneten tertiären Amine mit Hydroxylgruppen erhebt keinen Anspruch auf Vollständigkeit, sondern steht nur beispielhaft für mögliche Vertreter dieser Substanzklasse.

Bei der Reaktion mit Polyisocyanaten reagieren diese Amine wegen Fehlens reaktiver Wasserstoffatome am Stickstoff mit ihren Hydroxylgruppen unter Bildung von Urethanen ab. Die tertiäre Aminogruppe wird bei polyhydroxylfunktionellen Aminen Bestandteil der Polymerkette und bei monohydroxylfunktionellen Aminen an die Polymerkette endständig angebunden.

Für die Herstellung der erfindungsgemäß zu verwendenden Polyurethane eignen sich auch Epoxidharze auf Basis von aliphatischen Polyolen, wie z.B. [R]Epikote 160, [R]Epikote 162, [R]Epikote 812 (Handelsprodukt der Deutschen Shell) oder aromatische Diglycidylether auf Basis von 2,2-Bis-(4-hydroxyphenyl)-propan wie z.B. [R]Lekutherm X 18, [R]Lekutherm X 20, [R]Lekutherm X 23, [R]Lekutherm X 24 (Handeisprodukte der Bayer AG). Durch Öffnung des Epoxidringes mitsekundären Aminen und/oder Salzen tertiärer Amine werden tertiäre Aminogruppen und/oder quartäre Ammoniumgruppen aufweisende Diole erhalten, die dann in einer zweiten Reaktionsstufe durch Umsetzung mit Diisocyanaten zum Polyurethan umgesetzt werden.

An einen Teil dervorhandenen Epoxidgruppen können vor der Umsetzung mit sekundären Aminen und/oder Salzen tertiärer Amine auch ein- oder mehrfach ungesättigte Fettsäuren addiert werden. Die Fettsäuren reagieren mit den Epoxidgruppen unter Bildung von Estergruppen. Die nach der Umsetzung noch verbliebenen Epoxidgruppen werden anschließend durch Umsetzung mitsekundären Aminen und/oder Salzen tertiärer Amine geöffnet, wobei wiederum Diole mit tertiären Aminogruppen und/oder quartären Ammoniumgruppen erhalten werden.

Die erfindungsgemäß zu verwendenden Polyurethane bestehen bevorzugt bis zu 70 Gew.-% aus niedrigmolekularen Epoxiden oder Epoxidharzen mit Molmassen von 200 - 2000 g/mol. Bei den niedrigviskosen Epoxiden handelt es sich bevorzugt um Diglycidylether aliphatischer und/oder aromatischer Diole.

Als ungesättigte Fettsäuren werden die ungesättigten Fettsäuren verwendet, die vorstehend bereits für die Herstellung der ungesättigte Fettsäurereste aufweisenden Poly(meth)acrylate genannt wurden.

Geeignete sekundäre Amine für die Öffnung des Epoxidringes von Epoxidharzen sind z.B. Dimethylamin, Diethylamin, Dipropylamin, Di-n-Butylamin, Diisopropylamin und Disobutylamin und als Salze tertiärer Amine haben sich besonders die Salze, z.B. Acetate des Trimethylamins, Triethylamins, N,N-Dimethyl-ethanolamins, des N,N-Diethyl-ethanolamins, N-Methyl-diethanolamins, N-Butyldiethanolamins, 3-Diethylamino-1-propanols, 1-Dimethylamino-2-propanols und Triethanolamins bewährt.

Ein weiteres geeignetes Verfahren für die Herstellung der erfindungsgemäß zu verwendenden Polyurethane mit quartären Ammoniumgruppen ist die im Sinne einer Urethanbildung ablaufende Reaktion eines Diisocyanates mit einem acyclischen tertiären Monoamin mit einer Hydroxylgruppe. Die Reaktion wird so durchgeführt, daß beide Isocyanatgruppen des Diisocyanats mit dem Monoamin umgesetzt werden. Das erhaltene Urethangruppen aufweisende Zwischenprodukt weist endständig tertiäre Aminogruppen auf. Durch Zugabe von Säure werden die Aminogruppen protoniert und in tertiäre Ammoniumgruppen umgewandelt. Das am Ammoniumstickstoff befindliche H-Atom kann anschließend zur Reaktion mit Epoxidharzen genutzt werden. Dabei wird der Epoxidring unter Bildung von quartären Ammoniumgruppen geöffnet und es entstehen wasserverdünnbare Polyurethane.

Geeignete Epoxidharze im Sinne dieser Reaktion sind z.B. ®Epikote 160, ®Epikote 162, ®Epikote 812 oder aromatische Diglycidylether auf Basis von 2,2-Bis-(4-hydroxyphenyl)-propan, wie z.B. ®Lekutherm X 12, ®Lekutherm X 20, ®Lekutherm X 23 und ®Lekutherm X 24.

Für die vorausgehende Reaktion des Diisocyanates mit Amin geeignete tertiäre Amine mit einer Hydroxylgruppe sind z.B. N,N-Dimethylethanolamin, 2-[(2-Dimethylamino)ethoxy]-ethanol.

Für die Herstellung der nach den aufgeführten Verfahren herstellbaren erfindungsgemäß zu verwendenden Polyurethane in Betracht kommende Isocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136 beschrieben sind.

Beispiele für solche Polyisocyanate, die auch als Mischungen eingesetzt werden können, sind: 1,6-Hexamethylendiisocyanat, Cyclohexan-1,3- und -1,4-diisocyanat bzw. Gemische dieser Isomere, 5-Isocyanat-3-(isocyanat-methyl)-1,1,3-trimethylcyclohexan, Bis- [4-isocyanato-cyclohexyl]-methan, 1,3-Bis-[isocyanatomethyl]-benzol, 1,4-Bis-[2-isocyanato-ethyl]-cyclohexan, 1,3-Bis-[isocyanato-methyl]-cyclohexan, 1,3- und 1,4-Phenylendiisocyanat, 2,4- und 2,6-Toluylendiisocyanat bzw. Gemische dieser Isomere, Bis-[2-isocyanato-phenyl-methan, (2-Isocyanato-phenyl)-(4-isocyanat-phenyl)-methan, Bis-[4-isocyanataphenyl]-methan, 1,5-Bis-[isocyanato]-naphthalin und 4,4'-Bis-[isocyanato]-3,3'-dimethyl-biphenyl.

Es können auch Polyisocyanate mit mehr als zwei Isocyanatgruppen verwendet werden. Bevorzugt werden jedoch die vorstehend genannten Diisocyanate und besonders bevorzugt 5-Isocyanato-3-(isocyanato-methyl)-1,1,3-trimethylcydohexan verwendet.

Die tertiäre Aminogruppen enthaltenden Polyurethane müssen vor dem Verdünnen mit Wasser zunächst mit Säuren, vorzugsweise mit den bei den Poly(meth)acrylaten genannten $C_1$-$C_5$-Carbonsäuren neutralisiert werden.

Anschließend an die Herstellung der erfindungsgemäß zu verwendenden wasserverteilbaren Polymere mit besagtem Gehalt an chemisch gebundenen tertiären und/oder quartären Ammoniumgruppen, können die Polymere durch Zugabe von Wasser in 10 bis 50 gew.-%ige wäßrige Polymer-Konzentrate überführt und diese wäßrigen Polymer-Konzentrate zum Formulieren der in Wasser schwer- oder nichtlöslichen Mikrobizide verwendet werden. Es ist aber auch möglich, die Polymere unmittelbar mit dem Mikrobizid zu mischen und diese Mischung mit Wasser auf die gewünschte Konzentration zu verdünnen. Die Herstellung der erfindungsgemäßen Formulierungen kann z.B. in der Weise erfolgen, daß man eine vorgegebene Menge des wäßrigen Polymer-Konzentrates langsam unter Rühren mit den in flüssiger bzw. verflüssigter (z.B. geschmolzener oder in einer kleinen Menge organischer Lösungsmittel gelöster) Form vorliegenden Mikrobiziden versetzt. Auf diese Weise lassen sich wäßrige Mikrobizid-Formulierungen mit Wirkstoff-Gehalten bis zu 45 Gew.-% herstellen; für die praktische Anwendung haben sich Formulierungen mit Wirkstoff-Gehalten von 20 bis 40 Gew.-% und Polymer-Gehalten von 10 bis 30 Gew.-%, (alle Gew.-% bezogen auf das Gewicht der fertigen Formulierung) bewährt; der Wassergehalt dieser Formulierungen kann zwischen 15 und 65 Gew.-% und ihr Gehalt an organischen Lösungsmitteln zwischen 5 und 15 Gew.-% liegen (alle Gew.-% bezogen auf das Gewicht der fertigen Formulierungen).

Für die Stabilität der erfindungsgemäß hergestellten Mikrobizid-Formulierungen und die dauerhafte Fixierung der Mikrobizide auf den zu schützenden Materialien hat es sich bewährt, in den Formulierungen die Mengen an erfindungsgemäß zu verwendenden Polymeren und Mikrobiziden so aufeinander abzustimmen, daß auf 1 Äquivalent Ammoniumgruppen im Polymer 0,5-7,0 Mol Wirkstoff entfallen. Dieses Ammoniumgruppen/Wirkstoff-Verhältnis wird im allgemeinen erreicht, wenn in den Mikrobizid-Formulierungen das Gewichtsverhältnis Polymer:Mikrobizid 1:0,1 bis 2 beträgt.

Die erfindungsgemäß als Formulierungs-Hilfsmittel zu verwendenden wäßrigen Polymer-Konzentrate eignen sich

EP 0 410 213 B2

für die Herstellung stabiler Formulierungen von in Wasser nicht- oder nur schlechtlöslichen Mikrobiziden wie Thiocyanomethylthiobenzthiazol, Benzimidazolylmethylcarbamat, Methylenbisthiocyanat, Tebuconazol, Tributyl-Zinn-Salzen und vor allem von phenolischen Mikrobiziden wie o-Phenylphenol, p-Chlorm-Kresol und 2,2' -Dihydroxy-5,5' -dichlor-diphenyl-methan.

Die erfindungsgemäßen Formulierungen können zusätzlich zu den in Wasserverteilbaren besagten Gehalt an chemisch gebundenen tertiären und/oder quartären Ammoniumgruppen aufweisenden Polymeren, Mikrobiziden und Wasser noch organische Lösungsmittel und/oder aus der Lacktechnologie bekannte Hilft- und Zusatzmittel wie Pigmente, Füllstoffe, Verlaufhilfsmittel, Sikkative enthalten. Es ist jedoch hervorzuheben, daß es einer der Vorteile der erfindungsgemäßen Formulierungen ist, daß ihr Gehalt an organischen Lösungsmitteln sehr niedrig ist, im allgemeinen weniger als 10 Gew.-% betragen kann, bezogen auf das Gewicht der fertigen Formulierung. Geeignete organische Lösungsmittel sind beispielsweise Butylglykol, Methoxypropanol, Ethylenglykolmonoethylether, Butoxypropanol oder Gemische derartiger Lösungsmittel. Die Hilft- und Zusatzmittel können sowohl den Ausgangsmaterialien zur Herstellung der erfindungsgemäßen Formulierungen entstammen oder den fertigen Formulierungen gesondert zugesetzt werden.

Die Erfindung betrifft auch die erfindungsgemäß erhältlichen wasserhaltigen und wasserverdünnbaren Mikrobizid-Formulierungen. Diese Formulierungen sind dadurch gekennzeichnet, daß sie in Wasser verteilbare, einen Gehalt von 70 bis 500 meq chemisch gebundenen tertiären und/oder quartären Ammoniumgruppen aufweisenden Polymere, vorzugsweise Poly(meth)acrylate oder Polyurethane, Mikrobizide, Wasser, organische Lösungsmittel und gegebenenfalls aus der Lacktechnologie bekannte Hilfs- und Zusatzmittel enthaltend.

Die erfindungsgemäßen Mikrobizid-Formulierungen eignen sich allgemein für die Mikrobizid-Ausrüstung technischer Materialien. Als solche technischen Materialien seien beispielsweise genannt: Klebstoffe, Leime, Papier, Kartone, Textilien, Leder, Holz, Anstrichmittel und Kunststoffartikel, Kühlschmierstoffe und andere Materialien, die von Mikroorganismen befallen oder zersetzt werden können. Als zu schützende technische Materialien seien auch Teile von Produktionsanlagen, beispielsweise Kühlwasserkreisläufe, genannt, deren Funktion durch Vermehrung von Mikroorganismen beeinträchtigt werden kann. Besonders bevorzugt eignen sich die erfindungsgemäßen Mikrobizid-Formulierungen für die Mikrobizid-Ausrüstung von Holz, Textilien, Leder und Papier.

Die Erfindung betrifft daher auch die Verwendung der erfindungsgemäßen Mikrobizid-Formulierungen, gegebenenfalls in verdünnter Form, zur Mikrobizid-Ausrüstung technischer Materialien, insbesondere zur Ausrüstung von Holz, Textilien, Leder und Papier.

Als Mikroorganismen, die einen Abbau oder eine Veränderung dertechnischen Materialien bewirken können, seien beispielsweise Bakterien, Pilze, Hefen, Algen und Schleimorganismen genannt Vorzugsweise wirken die erfindungsgemäßen Wirkstoffe gegen Pilze, insbesondere Schimmelpilze, Holz dauerhaft verfärbende und holzzerstörende Pilze, sowie gegen Schleimorganismen und Algen.

Es seien beispielsweise Mikroorganismen der folgenden Gattungen genannt:

Alternaria, wie Alternaria tenuis,
Aspergillus, wie Aspergillus niger,
Chaetomium, wie Chaetomium globosum,
Coniophora, wie Coniophora puteana,
Lentinus, wie Lentinus tigrinus,
Penicillium, wie Penicillium glaucum,
Polyporus, wie Polyporus versicolor,
Aureobasidium, wie Aureobasidium pullulans,
Sderophoma, wie Sclerophoma pityophila,
Trichoderma, wie Trichoderma viride,
Escherichia, wie Escherichia coli,
Pseudomonas, wie Pseudomonas aeruginosa,
Staphylococcus, wie Staphylococcus aureus.

Bei den in den nachfolgenden Beispielen angegebenen Teilen handelt es sich um Gewichtsteile, sofern nichts anderes angegeben ist.

Beispiel 1

3.100 Teile einer wäßrigen Polymerisatlösung folgender Zusammensetzung

31,6 Gew.-%    wasserlösliches, 211,2 meq chemisch gebundene tertiäre Ammoniumgruppen je 100 g Polymerisat enthaltendes Copolymerisat
9,7 Gew.-%    Methoxypropanol

7

4,0 Gew.-%    Essigsäure

54,7 Gew.-%   destilliertes Wasser

100 Gew.-%

wird bei Raumtemperatur langsam unter kräftigem Rühren mit 810 Teilen o-Phenylphenol versetzt.

Es wird eine stabile Emulsion folgender Zusammensetzung erhalten:

26,4 Gew.-%   wasserlösliches, 211,1 meq chemisch gebundene tertiäre Aminogruppen je 100 g Polymerisat enthaltendes Copolymerisat

8,1 Gew.-%    Methoxypropanol

3,3 Gew.-%    Essigsäure

41,5 Gew.-%   destilliertes Wasser

20,7 Gew.-%   o-Phenylphenol

100 Gew.-%.

pH-Wert der Emulsion: 4,85; Viskosität 121 mPas.

Das Verhältnis Äquivalente Ammoniumgruppen zu Mol Mikrobizid beträgt 1:2,18.

Die Emulsion läßt sich mit Wasser ohne Schwierigkeiten auf Wirkstoffkonzentrationen von 1 bis 5 Gew.-% verdünnen.

Die verwendete wäßrige Polymerisat-Lösung war wie folgt erhalten worden:

a) 899,8 Teile Methoxypropanol wurden innerhalb von 2,5 Stunden bei 110°C unter Rühren tropfenweise mit einem Gemisch aus 738.7 Teilen Styrol, 330 Teilen Methacrylsäuremethylester, 35 Teilen n-Butylacrylat, 931 Teilen Glycidylmethacrylat, 45,7 Teilen Azo-bis-isobutyronitril und 19,9 Teilen Dodecanthiol versetzt. Nach 8-stündigem Nachreagieren bei 110°C war die Polymerisation beendet (bestimmt durch einstündiges Erhitzen einer Probe auf 120°C und Auswiegen der nichtflüchtigen Bestandteile).

Feststoffgehalt des Reaktionsproduktes 70,3 Gew.-%; Auslaufviskosität (nach DIN 53 211) des mit Methoxypropanol zu einer 40 %igen Lösung verdünnten Polymerisationsproduktes: 87 Sekunden.

b) 2.774,1 Teile der unter a) beschriebenen 70,3 Gew.-%igen Polymerisatlösung wurden unter Stickstoff 4 Stunden bei 120°C mit 282,1 Teilen eines Gemisches aus ungesättigten $C_{18}$-Carbonsäuren (Prifac 7968) umgesetzt (Säurezahl des Reaktionsproduktes: ~0,1).

Die Auslaufviskosität der mit Methoxypropanol zu einer 40 Gew.-%igen Lösung verdünnten Copolymerisat-Lösung: 52 Sekunden.

Feststoffgehalt des Reaktionsgemisches: 72,6 Gew.-%.

c) 265 Teile auf 50°C erwärmtes Diethylamin wurden unter Rühren innerhalb von 30 Minuten mit 2.000 Teilen der unter b) beschriebenen Copolymerisat-Lösung versetzt. Die Temperatur stieg dabei auf 100°C.

Das Reaktionsgemisch wird noch 3,5 Stunden bei 100 bis 110°C gerührt, anschließend werden 24,1 Teile Diethylamin und 18,9 Teile Methoxypropanol unter vermindertem Druck abdestilliert.

Das erhaltene Copolymerisat wies einen Gehalt an tertiären Aminogruppen von 211,2 mÄquivalenten je 100 g Polymerisat auf. Der Feststoffgehalt des Reaktionsproduktes betrug 76,6 Gew.-%. Die Auslaufviskosität des mit Methoxypropanol auf 40 Gew.-% verdünnten Reaktionsgemisches: 79 Sekunden. Durch Zugabe von Eisessig wurden die Aminogruppen in Ammoniumgruppen überführt und das Reaktionsprodukt durch portionsweise Zugabe von Wasser auf einen Feststoffgehalt von 31,6 Gew.-% verdünnt. Es wurde eine klare Lösung folgender Zusammensetzung erhalten:

31,6 Gew.-%   wasserlöslich.. tertiäre Ammoniumgruppen enthaltendes Copolymerisat

9,7 Gew.-%    Methoxypropanol

4,0 Gew.-%    Essigsäure

54,7 Gew.-%   destilliertes Wasser

100 Gew.-%.

Der pH-Wert der Lösung: 5,42

Viskosität: 1.170 mPas

8

Beispiel 2

100 Teile einer wäßrigen Polymerisatlösung folgender Zusammensetzung:

31,1 Gew.-%   wasserlösliches, 128,7 meq chemisch gebundene tertiäre Ammoniumgruppen je 100 g Polymerisat enthaltendes Copolymerisat
10,6 Gew.-%   Butylglykol
2,4 Gew.-%    Essigsäure
55,9 Gew.-%   destilliert.. Wasser
100 Gew.-%

werden bei Raumtemperatur unter kräftigem Rühren mit 29,9 Teilen o-Phenylphenol versetzt. Es wird eine stabile Emulsion folgender Zusammensetzung erhalten:

18,5 Gew.-%   wasserlösliches Copolymerisat
6,3 Gew.-%    Butylglykol
1,6 Gew.-%    Essigsaure
23,0 Gew.-%   o-Phenylphenol
50,6 Gew.-%   destilliertes Wasser
100 Gew.-%

pH-Wert der Emulsion: 6,22
Viskosität: 103 mPas.

Das Verhältnis Äquivalente Ammoniumgruppen zu Mol Mikrobizid beträgt 1:5,68.
Die zur Formulierung des o-Phenylphenol verwendete wäßrige Polymerisat-Lösung war wie folgt erhalten worden:

a) 1.726 Teile Glycidylmethacrylat, 316 Teile Styrol, 40,3 Teile Azo-bis-isobutyronitril und 17,5 Teile Dodecanthiol wurden in 900,2 Teilen Butylglykol wie in Beispiel 1a) beschrieben copolymerisiert. Es wurde eine Copolymerisatlösung mit einem Feststoffgehalt von 68,8 Gew.-% erhalten; die Auslaufviskosität der mit Dimethylformamid auf 40 Gew.-% verdünnten Copolymerisatlösung betrug 34 Sekunden; das Epoxidäquivalent betrug 172,8.
b) 2.725 Teile der in a) erhaltenen Copolymerisatlösung wurden unter den in Beispiel 1 b) beschriebenen Bedingungen mit 1.508,5 Teilen Prifac 7968 umgesetzt (Säurezahl des Umsetzungsproduktes: 0,1).
Viskosität des mit Dimethylformamid auf 40 Gew.-% verdünnten Lösung des Reaktionsproduktes: 88 Sekunden. Feststoffgehalt: 76,6 Gew.-%.
c) 2.200 g der in b) erhaltenen Lösung des Reaktionsproduktes wurden unter Rühren bei 80 bis 120°C mit einer Lösung von 240,5 Teilen Dimethylethanolamin und 162,5 Teilen Eisessig in 181,2 Teilen Butylglykol versetzt Das erhaltene Umsetzungsprodukt wies ein Gehalt an Ammoniumgruppen von 128,7 mÄquivalenten je 100 g Copolymerisat auf Kennzahlen der Lösung des Umsetzungsproduktes: Feststoffgehalt 74,6 Gew.-%; Auslaufviskosität der mit Dimethylformamid auf 40 Gew.-% verdünnten Lösung des Umsetzungsproduktes: 88 Sekunden.

Das Umsetzungsprodukt wurde durch portionsweise Zugabe von destilliertem Wasseraufeinen Feststoffgehaltvon 31,1 Gew.-% verdünnt. Es wurde eine klare Lösung folgender Zusammensetzung erhalten:

31,1 Gew.-%   wasserlösliches, 128,7 meq chemisch gebundene quartäre Ammoniumgruppen je 100 g Polymerisat
              enthaltendes Copolymerisat
10,6 Gew.-%   Butylglykol
2,4 Gew.-%    Essigsaure
55,9 Gew.-%   destilliertes Wasser
100 Gew.-%

Der pH-Wert der Polymerisatlösung: 7,31;
Viskosität: 10.500 mPas

Beispiel 3

100 Teile einer wäßrigen Polymerisatlösung folgender Zusammensetzung:

32,7 Gew.-%    wasserlösliches, 189,8 meq chemisch gebundene tertiäre Ammoniumgruppen je 100 g Polymerisat enthaltendes Copolymerisat
10,9 Gew.-%    Methoxypropanol
3,7 Gew.-%    Essigsaure
52.7 Gew.-%    destilliertes Wasser
$\overline{100\ \text{Gew.-%}}$

werden bei Raumtemperaturunterkräftigem Rühren miteiner 50 %igen Lösung eines p-Chlor-m-Kresol/o-Phenylphenol (2:3)-Gemisches in Butylglykol versetzt. Es wird eine stabile Emulsion folgender Zusammensetzung erhalten:

19,2 Gew.-%    wasserlösliches, 189,8 meq chemisch gebundene tertiäre Ammoniumgruppen je 100 g Polymerisat enthaltendes Copolymerisat
6,3 Gew.-%    Methoxypropanol
9,2 Gew.-%    Butylglykol
2,2 Gew.-%    Essigsaure
9,2 Gew.-%    des 2:3-Gemisches aus p-Chlor-m-Kresol und o-Phenylphenol
53,9 Gew.-%    Wasser
$\overline{100{,}0\ \text{Gew.-%}}$

pH-Wert der Emulsion: ~5,0; Viskosität: ~350 mPas Das Verhältnis Äquivalente Ammoniumgruppen zu Mol Mikrobizid beträgt 1:1,59.

Die für die Herstellung der Emulsion verwendete wäßrige Polymerisatlösung warwiefolgterhalten worden:

a) 742,4 Teile Styrol, 331,7 Teile Methylmethacrylat, 35,1 Teile n-Butylacrylat, 935,7 Teile Glycidylmethacrylat, 45,9 Teile Azo-bis-isobutyronitril und 20 Teile Dodecanthiol wurden in 904,4 Teilen Methoxypropanol unter den in Beispiel 1 a) beschriebenen Bedingungen copolymerisiert. Nach 8-stündiger Reaktionszeit bei 110°C wurde eine Copolymerisat-Lösung mit einem Feststoffgehalt von 70,6 Gew.-% erhalten. Epoxidäquivalent des Polymerisates: 172,8; Viskosität der mit Methoxypropanol auf 40 Gew.-% verdünnten Copolymerisatlösung: 86 Sekunden.
b) 2.766,2 Teile der in a) erhaltenen Copolymerisat-Lösung wurden unter den in Beispiel 1 b) beschriebenen Bedingungen mit 282.1 Teilen Prifac 7968 umgesetzt (Säurezahl des Umsetzungsproduktes: 1,0). Feststoffgehalt der Reaktionslösung: 72,7 Gew.-%; Auslaufviskosität des mit Methoxypropanol auf 40 Gew.-% verdünnten Reaktionsproduktes: 75 Sekunden.
c) 2.600 Teile der in b) erhaltenen Reaktionslösung wurden mit 345 Teilen Diethylamin unterden in Beispiel 1C) beschriebenen Bedingungen umgesetzt. Der Aminüberschuß von 31,4 Teilen wurde unter vermindertem Druck abdestilliert.

Das erhaltene tertiäre Aminogruppen aufweisende Polymerisat wies einen Gehalt an Aminogruppen von 189,8 mÄquivalenten je 100 g Polymerisat auf. Feststoffgehalt der Reaktionslösung: 75,0 Gew.-%; Viskosität der mit Methoxypropanol auf 40 Gew.-% verdünnten Reaktionslösung: 108 Sekunden.
Nach Neutralisation aller im Polymerisat vorliegenden Aminogruppen mit Essigsäure wurde die Lösung des Reaktionsproduktes durch portionsweise Zugabe von Wasser auf einen Feststoffgehalt von 32,7 Gew.-% verdünnt. Die klare Lösung wies einen pH-Wertvon 6,1 und eine Viskosität von 24.700 mPas auf. Zusammensetzung der wäßrigen Lösung:

32,7 Gew.-%    wasserlösliches, 189,8 meq tertiäre Ammoniumgruppen je 100 g Polymerisat enthaltendes Copolymerisat
10,9 Gew.-%    Methoxypropanol
3,7 Gew.-%    Essigsaure
52,7 Gew.-%    destilliertes Wasser
$\overline{100\ \text{Gew.-%}}$

Beispiel 4

67,3 Teile der gemäß Beispiel 3C) erhaltenen wäßrigen Polymerisatlösung wurden bei Raumtemperatur unter kräftigem Rühren mit der 34,2 %igen Lösung von 5,5'-Dichlor-2,2'-dihydroxydiphenylmethan in Butylglykol versetzt Anschließend wurden noch 7 Teile Wasser zugegeben. Es wurde eine stabile Emulsion folgender Zusammensetzung erhalten:

22,0 Gew.-%   wasserlösliches, 189,8 meq chemisch gebundene tertiäre Ammoniumgruppen je 100 g Polymerisat enthaltendes Copolymerisat
7,3 Gew.-%    Methoxypropanol
2,5 Gew.-%    Essigsäure
8,8 Gew.-%    5,5' -Dichlor-2,2'-dihydroxydiphenylmethan
16,9 Gew.-%   Butylglykol
42.5 Gew.-%   Wasser
--------------
100 Gew.-%

pH-Wert der Emulsion: ~5,0; Viskosität: ~1300 mPas Das Verhältnis Äquivalente Ammoniumgruppen zu Mol Mikrobizid beträgt 1:0,79.

Beispiel 5

100,0 Teile einer wäßrigen Polymerisatlösung folgender Zusammensetzung:

32,5 Gew.-%   wasserlösliches, 298,3 meq tertiäre Ammoniumgruppen je 100 g Polymerisat enthaltendes Copolymerisat
8,6 Gew.-%    Methoxypropanol
6,0 Gew.-%    Essigsäure
52,9 Gew.-%   destilliertes Wasser
--------------
100 Gew.-%

wird bei Raumtemperatur langsam unter kräftigem Rühren mit 42,5 Teilen o-Phenylphenol versetzt.
Es wird eine stabile Emulsion folgender Zusammensetzung erhalten:

22,8 Gew.-%   wasserlösliches, 298,3 meq chemisch gebundene tertiäre Aminogruppen je 100 g Polymerisat enthaltendes Copolymerisat
6,0 Gew.-%    Methoxypropanol
4,2 Gew.-%    Essigsäure
37,1 Gew.-%   destilliertes Wasser
29,8 Gew.-%   o-Phenylphenol
--------------
99,9 Gew.-%.

pH-Wert der Emulsion: 5,36; Viskosität: 99 mPas.

Das Verhältnis Äquivalente Ammoniumgruppen zu Mol Mikrobizid beträgt 1:2,58.
Die Emulsion läßt sich mit Wasser ohne Schwierigkeiten auf Wirkstoffkonzentrationen von 1 bis 5 Gew.-% verdünnen.
Die für die Herstellung der Emulsion verwendete wäßrige Polymerisatlösung warwiefolgterhalten worden:
Ein Gemisch aus 672 Teilen Styrol, 300,2 Teilen Methylmethacrylat, 31,8 Teilen n-Butylacrylat, 936,4 Teilen N,N-Dimethylaminoethylmethacrylat, 41,6 Teilen Porophor-N und 18,1 Teilen Dodecanthiol wurden innerhalb von 2,5 Stunden bei 110°C in 500 Teile Methoxypropanol getropft. Das Polymerisationsgemisch wurde 6 Stunden bei 110°C gerührt.
Der Feststoffgehalt der Polymerisationslösung betrug dann 79,1 Gew.-%, die Ausflaufviskosität der mit Methoxypropanol auf 40 Gew.-% verdünnten Copolymerisatlösung 47 Sekunden. Gehalt des Copolymerisates an tertiären Aminogruppen: 298,3 mÄquivalente je 100 g Copolymerisat.
Nach Neutralisation der Aminogruppen mit Essigsäure wurde die Copolymerisat-Lösung durch portionsweise Zugabe von Wasser auf einen Feststoffgehalt von 32,5 Gew.-% verdünnt. Es wurde eine klare Lösung folgender Zusammensetzung erhalten:

32,5 Gew.-%   wasserlösliches, 298,3 meq chemisch gebunden tertiäre Ammoniumgruppen je 100 g Polymerisat enthaltendes Copolymerisat
6,0 Gew.-%    Essigsaure
8,6 Gew.-%    Methoxypropanol
52,9 Gew.-%   destilliertes Wasser
--------------
100,0Gew.-%

Der pH-Wert der Lösung betrug 5,36 und die Viskosität 6.320 mPas.

Beispiel 6

Holzchips aus Kiefernsplintholz wurden durch Eintauchen

a) in die in Beispiel 1 beschriebene, mit Wasser aufeinen Wirkstoffgehaltvon 1,5 Gew.-%. o-Phenylphenol verdünnte Formulierung
b) in die in Beispiel 1 beschriebene, mit Wasseraufeinen Wirkstoffgehaltvon 4,5 Gew.-% o-Phenylphenol verdünnte Formulierung
c) in eine wäßrige, 1,5 Gew.-% Kaliumsalz des o-Phenylphenols und
d) in eine wäßrige, 4,5 Gew.-% Kaliumsalz des o-Phenylphenols enthaltende Lösung

imprägniert. Nach dem Trocknen der Chips wurde die Abnahme des Wirkstoffgehaltes durch Verdunstungsbeanspruchung ermittelt.

Durchgeführt wurde diese Verdunstungsbeanspruchung im Windkanal in Anlehnung an DIN EN 73 mit einem Windkanalgerät Typ WK 320-313 der PVP GmbH. Die Windgeschwindigkeit betrug 1 ± 0,1 m/sek und die Temperatur des Luftstromes 40 ± 2°C.

Zur Bestimmung des Verhaltens bei Verdunstungsbeanspruchung wurden die Holzchips nach dem Imprägnieren 24 Stunden im Abzug aufbewahrt. Anschließend wurden die Chips auf die vier Kammern des Windkanals verteilt und zwar jeweils die mit der gleichen Lösung imprägnierten Chips in eine Kammer.

Nach 5-wöchiger Behandlung im Windkanal ergab die analytische Untersuchung der Holzchips folgende Wiederfindungsrate für das o-Phenylphenol:

Tabelle 1

| Wiederfindungsrate nach 5 Wochen Windkanal | |
| --- | --- |
| a) | 72 bis 80 % |
| b) | 82 bis 83 % |
| c) | 10 % |
| d) | 10 % |

Beispiel 7

Baumwollgewebe wurde durch Eintauchen

a) in die gemäß Beispiel 1 C) erhaltene wäßrige Polymerisatlösung
b) in die gemäß Beispiel 1 hergestellte o-Phenylphenol-Emulsion
c) in eine wäßrige Lösung des Kaliumsalzes des o-Phenylphenols

imprägniert. Die Konzentrationen der Imprägnierlösungen wurden dabei so gewählt, daß gleiche Mengen o-Phenylphenol in denjeweiligen Proben des Baumwollgewebes enthalten waren, nämlich 0,5 Gew.-% bezogen auf das Gewebegewicht.

Die imprägnierten Gewebe wurden bei Raumtemperatur getrocknet und anschließend 10 Minuten bei 120°C und 5 Minuten bei 150°C getempert Anschließend wurde die mikrobizide Wirksamkeit der Stoffproben durch Agar Diffusionstest gegen die Testkeime Aspergillus niger und Chaetomium globosum bestimmt. Die Auswertung wurde nach 7-tägiger Lagerung bei 30°C vorgenommen.

Die für die einzelnen Gewebeproben ermittelten Werte sind in der nachstehenden Tabelle zusammengestellt:
Die Zahlen der Bewertung in der Tabelle haben folgende Bedeutung:

0 = ungenügende Wirkung
Die Prüflinge sind zu >25% ihrer Oberfläche mit Testorganismen bewachsen.
1 = mäßige Wirkung
Die Prüflinge sind zu >25% ihrer Oberfläche mit Testorganismen bewachsen.

2 = gute Wirkung
Die Prüflinge sind frei von Wachstum, ohne die Bildung eines Hemmhofes oder einer Hemmzone.
3 = sehr gute Wirkung
Die Prüflinge sind frei von Wachstum, darüber hinaus wurde ein Hemmhof oder eine Hemmzone gebildet.

Tabelle 2

|  | Trocknung | Bewertung |
|---|---|---|
| a) | Raumtemperatur 150° C | 0 |
|  |  | 1 |
| b) | Raumtemperatur 150° C | 3 |
|  |  | 3 |
| c) | Raumtemperatur 150° C | 3 |
|  |  | 1 |

Aus Tabelle 2 geht hervor, daß die Formulierung gemäß Beispiel 1 sowohl bei Raumtemperatur als auch bei 150°C eine sehrgute mikrobizide Ausrüstung bewirkt. Die alkalische Formulierung bewirkt dagegen eine mikrobizide Ausrüstung, die nach der Temperaturbelastung sehrschnell an Wirksamkeit verliert. was an der deutlichen Abnahmevon 3 nach 1 erkennbarist. Daswasserlösliche Copolymerisat ohne Wirkstoff zeigt nach derverschärften Trocknung eine mäßige Eigenwirksamkeit.

Beispiel 8

1000 Teile einer wäßrigen Polymerlösung folgender Zusammensetzung:

57,3 Gew.-%  wasserlösliches, 192,3 meq chemisch gebundene tertiäre Ammoniumgruppen je 100 g Polykondensat aufweisendes Polyurethan
7,5 Gew.-%  Essigsäure
35,2 Gew.-%  Wasser
100,0 Gew.-%

werden bei 50°C unter kräftigem Rühren mit 121,1 Teilen geschmolzenem o-Phenylphenol tropfenweise versetzt. Es wird eine klare Lösung folgender Zusammensetzung erhalten:

51,1 Gew.-%  wasserlösliche., 192,3 meq chemisch gebundene tertiäre Ammoniumgruppen je 100 g Polykondensat enthaltendes Polyurethan
6,7 Gew.-%  Essigsäure
31,4 Gew.-%  Wasser
10,8 Gew.-%  o-Phenylphenol
100,0 Gew.-%

pH-Wert der Lösung: 4,94;
Viskosität: 42 700 mPas.

Das Verhältnis Äquivalente tertiäre Ammoniumgruppen zu Mol Mikrobizid beträgt 1:0,57. Die Lösung läßt sich mit Wasserohne Schwierigkeiten auf Wirkstoffkonzentrationen von 1 Gew.-% verdünnen.
Die verwendete wäßrige Polymer-Lösung war wie folgterhalten worden:
Das in einermit Rückflußkühler, Tropftrichter und Thermometerausgestatteten Rührapparatur befindliche Gemisch aus 177,9 Teilen Tetraethylenglykol, 255,1 Teilen N-Methyldiethanolamin und 500 Teilen Tetrahydrofuran wurde bei 60°C innerhalb von 3 Stunden tropfenweise mit 617 Teilen Isophorondiisocyanat versetzt. Nach 9-stündigem Rühren des Reaktionsgemisches bei 60 bis 80°C war der Gehalt an Isocyanatgruppen auf <0,1 gesunken. Nach Abdestillieren von 290 Teilen Tetrahydrofuran (Wasserstrahlvakuum) wurden die im Reaktionsgemisch befindlichen Aminogruppen durch Zugabe von Eisessig neutralisiert. Das Neutralisationsgemisch wurde anschließend durch Zugabe von destilliertem Wasser auf einen Polymer-Gehalt von etwa 60 Gew.-% eingestellt. Anschließend wurde das restliche Tetrahydrofuran aus dem Neutralisationsgemisch durch 16-stündiges Durchleiten von Stickstoff (30 1/$N_2$/h) bei 60°C ausgetrieben. Die zurückbleibende Polymer-Lösung wies einen Feststoffgehalt von 57,3 Gew.-% auf (bestimmt durch 1-stündiges Erhitzen einer Probe auf 120°C und Auswiegen der nicht- flüchtigen Bestandteile). Gehalt des Polymeren an tertiären Ammoniumgruppen: 192,3 meq je 100 g Polyurethan.

pH-Wert der Polymerlosung: 5,22;
Viskosität: 13 300 mPas.

Die Polymerlösung ließ sich durch Zugabe von Wasser auf einen Polymergehalt bis zu 10 Gew.-% verdünnen.

Beispiel 9

500 Teile einer wäßrigen Polymerlösung folgender Zusammensetzung:

| | |
|---|---|
| 35,0 Gew.-% | wasserlösliches, 171,1 meq chemisch gebunden tertiäre Ammoniumgruppen je 100 g Polymer enthaltendes Polyurethan |
| 4,0 Gew.-% | Essigsäure |
| 45,7 Gew.-% | Wasser |
| 15,3 Gew.-% | Ethylenglykolmonobutylether |
| 100,0 Gew.-% | |

werden bei etwa 60°C unter kräftigem Rühren tropfenweise mit 66 Teilen geschmolzenem o-Phenylphenol versetzt. Es entsteht eine klare stabile Lösung folgender Zusammensetzung:

| | |
|---|---|
| 31,5 Gew.-% | wasserlösliches, 171,1 meq chemisch gebundene tertiäre Ammoniumgruppen je 100 g Polymer aufweisendes Polyurethan |
| 3,6 Gew.-% | Essigsäure |
| 41,1 Gew.-% | Wasser |
| 13,7 Gew.-% | Ethylenglykolmonobutylether |
| 10,1 Gew.-% | o-Phenylphenol |
| 100,0 Gew.-% | |

pH-Wert der Lösung: 5,18;
Viskosität: 2440 mPas.

Das Verhältnis Äquivalente Ammoniumgruppen zu Mol Mikrobizid beträgt 1:0,88. Aus der Lösung entsteht beim weiteren Verdünnen mit Wasser eine stabile Emulsion.
Die verwendete wäßrige Polymerlösung war wie folgt erhalten worden:

1241,4 Teile ®Lekutherm X 20 (Standard-Flüssigharz auf Basis des Glycidylethers des Bisphenol A, Epoxidäquivalentgewicht: 185 bis 200) wurden in einer Rührapparatur bei 140°C mit 358,6 Teilen Sojaölfettsäure bis zu einer Säurezahl von 2,5 mg KOH/g umgesetzt.
1450 Teile des so erhaltenen Epoxygruppen aufweisenden Reaktionsproduktes wurden im Verlauf von 75 Minuten bei 50 bis 120°C mit 399,1 Teilen Diethylamin versetzt. Nach Zugabe des Amins wurde das Reaktionsgemisch 4 Stunden bei 100 bis 105°C gerührt. Gehalt des Reaktionsproduktes an Aminogruppen: 251,7 meq je 100 g Polymer.
1787,1 Teile dieses aminogruppenhaltigen Reaktionsproduktes wurden innerhalb von 4 Stunden mit 453 Teilen Isophorondiisocyanat tropfenweise versetzt. Das Reaktionsgemisch wurde 3 Stunden auf 150°C erhitzt (Gehalt an NCO-Gruppen: 0 %; Gehalt an Aminogruppen: 190,9 meq je 100 g Polymer). Auslaufviskosität (nach DIN 53 211) des mit Dimethylförmamid zu einer 60 %igen Lösung verdünnten Polymeren: 37 Sekunden.

Die Aminogruppen des Polyurethans wurden anschließend durch Zugabe von Eisessig neutralisiert und das Neutralisationsprodukt durch Zugabe von destilliertem Wasser auf einen Polymer-Gehalt von 41,3 verdünnt.
Der Gehalt an tertiären Ammoniumgruppen je 100 g Polyurethan beträgt 171,2 meq.

pH-Wert der Lösung: 5,35;

Viskosität: 13 600 mPas.

Durch Zugabe von Ethylenglykolmonobutylether wurde die 41,3 gew.-%ige Lösung auf einen Polymer-Gehalt von 35,0 Gew.-% verdünnt.

Beispiel 10

1000 Teile einer wäßrigen Polymer-Lösung folgender Zusammensetzung:

| | |
|---|---|
| 52,5 Gew.-% | wasserlösliches, 255,4 meq chemisch gebundene quartäre Ammoniumgruppen je 100 g Polymer aufweisendes Polyurethan |
| 47,5 Gew.-% | Wasser |
| 100,0 Gew.-% | |

werden bei 50°C unter kräftigem Rühren tropfenweise mit 113,6 Teilen geschmolzenem o-Phenylphenol versetzt. Es wird eine klare Lösung folgender Zusammensetzung erhalten:

| | |
|---|---|
| 47,1 Gew.-% | wasserlösliches, 255,4 meq chemisch gebundene quartäre Ammoniumgruppen je 100 g Polymer aufweisendes Polyurethan |
| 42,7 Gew.-% | Wasser |
| 10,2 Gew.-% | o-Phenylphenol |
| 100,0 Gew.-% | |

pH-Wert der Lösung: 7,34;
Viskosität: 887 mPas.

Das Verhältnis Äquivalente quartäre Ammoniumgruppen zu Mol Mikrobizid beträgt 1:0,5. Die Lösung läßt sich mit Wasser unter Bildung einer stabilen Emulsion verdünnen.

Die verwendete wäßrige Polymer-Lösung war wie folgt erhalten worden:

Die in einer mit Rückflußkühler, Kontaktthermometer und Tropftrichterversehenen Rührapparatur befindlichen 267 Teile N,N-Dimethylethanolamin wurden bei 70°C tropfenweise unter Rühren innerhalb von 3 Stunden mit 333 Teilen Isophorondiisocyanat versetzt. Das Reaktionsgemisch wurde 1,5 Stunden gerührt (Gehalt an freien NCO-Gruppen: 0; Gehalt an Aminogruppen: 494,3 meq je 100 g Umsetzungsprodukt).

590 Teile des erhaltenen, aminogruppenaufweisenden Umsetzungsproduktes wurden mit 177 Teilen Eisessig bei 90°C neutralisiert. Das Neutralisationsgemisch wurde anschließend innerhalb von 3 Stunden bei 60 bis 105°C mit 387,6 Teilen ®Epikote 812 tropfenweise versetzt. Um eine ausreichende Rührbarkeit zu gewährleisten, wurde während der Umsetzung 600 Teile Tetrahydrofuran zugegeben.

Die erhaltene Lösung des Polymers in Tetrahydrofuran wurde anschließend mit Wasser auf einen Polymergehalt von etwa 52 Gew.-% verdünnt. Anschließend wurde das Tetrahydrofuran aus der Polymerlösung durch Einleiten eines kräftigen Stickstoffstromes (30 1 $N_2$/h) innerhalb von 13 Stunden bei 60°C ausgetrieben.

Polymergehalt der so erhaltenen Lösung: 52,5 Gew.-%;

Viskosität: 331 mPa.s;
pH-Wert: 8,08;

Gehalt an chemisch gebundenen quartären Ammoniumgruppen: 255,4 meq je 100 g Polymer.

Beispiel 11

Baumwollgewebe wurde durch Eintauchen

a) in die gemäß Beispiel 8 und 9 erhaltene wäßrige Polymerisatlösung
b) in die gemäß Beispiel 8, 9 und 10 hergestellte o-Phenylphenol-Emulsion
c) in eine Isopropanollösung des o-Phenylphenols

imprägniert. Die Konzentrationen der Imprägnierlösungen wurden dabeo so gewählt, daß gleiche Mengen o-Phenylphenol in die jeweiligen Proben des Baumwollgewebes enthalten waren, nämlich 0,25 und 0,5 Gew.-% bezogen auf Gewebegewicht.

Die imprägnierten Gewebe wurden bei Raumtemperatur getrocknet und anschließend 20 Minuten bei 150°C getempert. Danach wurde die mikrobizide Wirksamkeit der Stoffproben durch Agar Diffusionstest gegen des Testkeim Aspergillus niger bestimmt. Die Auswertung wurde nach 7-tägiger Lagerung bei 25°C vorgenommen.

Die für die einzelnen Gewebeproben ermittelten Werte sind in der nachstehenden Tabelle zusammengestellt. Die Zahlen der Bewertung haben dieselbe Bedeutung wie in Tabelle 2.

Tabelle 3

| verwendete Formulierung | % Wirk-stoff | Trocknung | |
|---|---|---|---|
| | | RT/20' | 150° C |
| o-Phenylphenol in Isopropanol | 0,25 | 1-2 | 0 |
| | 0,50 | 2-3 | 1-2 |
| gemäß Beispiel 8 | - | 0 | 1 |
| | 0,25 | 3 | 2 |
| | 0,51 | 3 | 3 |
| gemäß Beispiel 9 | - | 0 | 0 |
| | 0,25 | 2-3 | 2 |
| | 0,50 | 3 | 2-3 |
| gemäß Beispiel 10 | 0,25 | 3 | 3 |
| | 0,50 | 3 | 3 |

Beispiel 12

Baumwollgewebe wurde wie im Beispiel 4 beschrieben durch Eintauchen imprägniert. Die imprägnierten Gewebe wurden bei Raumtemperatur getrocknet und nachfolgend 20 Minuten bei 150°C getempert. Anschließend wurden die Baumwollgewehe 20 bzw. 60 Minuten gewässert. Die mikrobizide Wirksamkeit der Stoffprobenwurde dann durch Agar Diffusionstest gegen den Testkeim Aspergillus niger bestimmt. Die Auswertung erfolgte wiederum nach 7-tägiger Bebrütungszeit bei 25°C. In der nachfolgenden Tabelle sind die dabei erhaltenen Ergebnisse aufgeführt:

Tabelle 4

| verwendete Formulierung | % Wirkstoff | Wässerung | |
|---|---|---|---|
| | | 20' | 60' |
| o-Phenylphenol in Isopropanol | 0,25 | 0/0 | 0/0 |
| | 0,50 | 1/1 | 0/1 |
| gemäß Beispiel 8 | - | 0/1 | 0-1/1 |
| | 0,25 | 2/2 | 2/2 |
| | 0,51 | 3/3 | 3/3 |
| gemäß Beispiel 9 | - | 0/0 | 0/0 |
| | 0,25 | 2/1 | 2/1 |
| | 0,50 | 3/2 | 3/2 |
| gemäß Beispiel 10 | 0,25 | 2/2 | 0/0 |
| | 0,49 | 3/3 | 1/1-2 |

Aus Tabelle 3 geht hervor, daß die Formulierungen gemäß Beispiel 8, 9 und 10 sowohl bei Raumtemperatur als auch nach 20-minütiger Temperung bei 150°C ihre gute bis sehr gute Wirkung behalten. Besonders hervorzuheben ist auch, daß mit geringen Wirkstoffgehalten, z.B. 0,25% gute Wirksamkeiten erreicht werden. Die isopropanolischen Formulierungen zeigen nachTrocknung bei Raumtemperatur erst ab 0,5 % gute bis sehr gute mikrobizide Wirksamkeit. Nach 20-minütiger Temperung bei 150°C ist bei einem ursprünglichen Wirkstoffgehaltvon 0,25 % keine mikrobizide Wirksamkeit mehr feststellbar. Bei einem ursprünglichen Wirkstoffgehalt von 0,5 % ist nur noch mäßige bis gute Wirksamkeit vorhanden.

In Tabelle 4 zeigt sich deutlich die verbesserte Fixierung, die mit den Formulierungen gemäß Beispiel 8, 9 und 10 erreicht wurden. Während die mit der isopropanolischen Formulierung behandelten Stoffe bei der Wässerung ihre mikrobizide Wirksamkeit fast vollständig verlieren, zeigen die mit den erfindungsgemäßen Formulierungen behandelten Stoffe gute bis sehr gute Wirksamkeiten.

**Patentansprüche**

1. Verwendung von in Wasser verteilbaren Polyurethanen oder Poly(meth)acrylaten erhalten aus Umsetzungsprodukten von Copolymerisaten aus Styrol, Methylmethacrylat, Glycidylmethacrylat und gegebenenfalls n-Butylacrylat mit 5 - 40 Gew.-% ungesättigtenFettsäuren und 5 bis 25 Gew.-% Diethylamin oder Dimethyl-(1-hydroxyethyl)-ammoniumacetat , alle Gew.-% jeweils bezogen auf das Gesamtgewicht des jeweils vorliegenden Polymerisates, wobei die Polymere jeweils einen Gehalt an chemisch gebundenen tertiären und/oder quartären Ammoniumgruppen von 70 - 500 meq je 100 g Polymer aufweisen, als Hilfsmittel für die Herstellung wasserhaltiger und mit Wasser verdünnbarer Formulierungen von in Wasser unlöslichen bzw. in Wasser schwer löslichen mikrobiziden Wirkstoffen.

2. Verwendung nach Anspruch 1, dadurch gekennzeichnet, daß die in Wasser verteilbaren Polymere einen Gehalt an chemisch gebundenen tertiären und/oder quartären Ammoniumgruppen von 100 bis 400 Äquivalenten je 100 g Polymer aufweisen.

3. Verwendung nach Anspruch 1 oder 2, dadurch gekennzeichnet, daß die in Wasser verteilbaren Polymere zusätzlich zu den 70 bis 500 meq chemisch gebundener teriärer und/oder quartäre Ammoniumgruppen je 100 g Polymer chemisch gebundene Reste ein- oder mehrfach ungesättigter Fettsäuren aufweisen.

4. Verwendung nach einem der Ansprüche 1 bis 3 dadurch gekennzeichnet, daß die Polyurethane bis zu 70 Gew.-% aus niedrigmolekularen Epoxiden oder Epoxidharzen mit Molmasssen von 200 bis 2000 g/mol bestehen.

5. Verfahren zur Herstellung wasserhaltiger und mit Wasser verdünnbarer Mikrobizid-Formulierungen, dadurch gekennzeichnet, daß man ein wäßriges Konzentrat der in Wasser verteilbaren Polymere nach einem der Ansprüche 1 bis 4 mit den in flüssiger oder verflüssigter Form vorliegenden Mikrobiziden innig vermischt.

6. Wasserhaltige und mit Wasser verdünnbare Mikrobizid-Formulierungen, dadurch gekennzeichent, daß sie in Wasser verteilbare, einen Gehalt von 70 bis 500 meq chemisch gebundenen tertiären und/oder quarternären Ammoniumgruppen je 100 g Polymer aufweisende Polyurethane oder Poly(meth)acrylate erhalten aus Umsetzungsprodukten von Copolymerisaten aus Styrol, Methylmethacrylat, Glycidylmethacrylat und gegebenenfalls n-Butylacrylat mit 5 - 40 Gew.-% ungesättigter Fettsäuren und 5 bis 25 Gew.-% Diethylamin oder Dimethyl-(1-hydroxyethyl)-ammoniumacetat, alle Gew.-% jeweils bezogen auf das Gesamtgewicht des jeweils vorliegenden Polymerisates, Mikrobizide, Wasser und gegebenenfalls organische Lösungsmittel sowie aus der Lacktechnologie bekannte Hilfs- und Zusatzmittel enthalten.

7. Verwendung der wasserhaltigen und mit Wasser verdünnbaren Mikrobizid-Formulierung nach Anspruch 6, gegebenenfalls in verdünnter Form, zur Mikrobizid-Ausrüstung technischer Materialien.

**Claims**

1. Use of water-dispersible polyurethanes or poly(meth)acrylates obtained from reaction products of copolymers of styrene, methyl methacrylate, glycidyl methacrylate and if appropriate n-butyl acrylate with 5 - 40% by weight of unsaturated fatty acids and 5 to 25% by weight of diethylamine or dimethyl-(1-hydroxyethyl)-ammonium acetate, all the % by weight in each case being based on the total weight of the particular polymer present the polymers containing 70 - 500 meq of chemically bonded tertiary and/or quaternary ammonium groups per 100 g of polymer, as auxiliaries for the preparation of water-containing and water-dilutable formulations of microbicidal active compounds which are insoluble in water or are sparingly soluble in water.

2. Use according to Claim 1, characterized in that the water-dispersible polymers contain 100 to 400 milliequivalents of chemically bonded tertiary and/or quaternary ammonium groups per 100 g of polymer.

3. Use according to Claim 1 or 2, characterized in that the water-dispersible polymers contain chemically bonded radicals of mono- or polyunsaturated fatty acids in addition to the 70 to 500 meq of chemically bonded tertiary and/or quaternary ammonium groups per 100 g of polymer.

4. Use according to one of Claims 1 to 3, characterized in that the polyurethanes consist of up to 70% by weight of low molecular weight epoxides or epoxy resins with molecular masses from 200 to 2000 g/mol.

5. Process for the preparation of water-containing and water-dilutable microbicidal formulations, characterized in that an aqueous concentrate of the water-dispersible polymers according to one of Claims 1 to 4 is intimately mixed with the microbicides, which are in liquid or liquefied form.

6. Water-containing and water-dilutable microbicidal formulations, characterized in that they contain water-dispersible polyurethanes or poly(meth)acrylates containing 70 to 500 meq of chemically bonded tertiary and/or quaternary ammonium groups per 100 g of polymer and obtained from reaction products of copolymers of styrene, methyl methacrylate, glycidyl methacrylate and if appropriate n-butyl acrylate with 5 - 40% by weight of unsaturated fatty acids and 5 to 25% by weight of diethylamine or dimethyl-(1-hydroxyethyl)-ammonium acetate, all the % by weight in each case being based on the total weight of the particular polymer present, microbicides, water and if appropriate organic solvents as well as auxiliaries and additives known from coating technology.

7. Use of the water-containing and water-dilutable microbicidal formulations according to Claim 6, if appropriate in dilute form, for microbicidal treatment of industrial materials.

**Revendications**

1. Utilisation de polyuréthanes ou de poly(méth)acrylates répartissables dans l'eau obtenus à partir de produits de réaction de copolymères de styrène, de méthacrylate de méthyle, de méthacrylate de glycidyle et éventuellement d'acrylate de n-butyle avec 5 à 40 % en poids d'acides gras insaturés et 5 à 25 % en poids de diéthylamine ou d'acétate de diméthyl-(1-hydroxyéthyl)-ammonium, tous les pourcentages en poids étant rapportés au poids total du polymère présent dans chaque cas, les polymères présentant dans chaque cas une teneur en groupes ammonium tertiaires et/ou quaternaires liés chimiquement de 70 à 500 méq pour 100 g de polymère, comme adjuvant pour la préparation de fomulations contenant de l'eau et diluables à l'eau de substances actives microbicides insolubles dans l'eau ou peu solubles dans l'eau.

2. Utilisation selon la revendication 1, caractérisée en ce que les polymères répartissables dans l'eau présentent une teneur en groupes ammonium tertiaires et/ou quaternaires chimiquement liés de 100 à 400 équivalents pour 100 g de polymère.

3. Utilisation selon la revendication 1 ou 2, caractérisée en ce que les polymères répartissables dans l'eau présentent, en plus des 70 à 500 milliéquivalents de groupes ammonium tertiaires et/ou quaternaires chimiquement liés, pour 100 g de polymère, des restes chimiquement liés d'acides gras mono- ou poly-insaturés.

4. Utilisation selon l'une des revendications 1 à 3, caractérisée en ce que les polyuréthanes consistent, pour une proportion pouvant aller jusqu'à 70 % en poids, en des époxydes à bas poids moléculaires ou en des résines époxy ayant des masses molaires de 200 à 2 000 g/mol.

5. Procédé pour produire des formulations de microbicides, contenant de l'eau et diluables à l'eau, caractérisé en ce qu'on mélange intimement un concentré aqueux des polymèrs répartissables dans l'eau, selon l'une des revendications 1 à 4 avec les microbicides présents sous forme liquide ou liquéfiée.

6. Formulations de microbicides contenant de l'eau et diluables à l'eau, caractérisées en ce qu'elles contiennent des polyuréthanes ou des poly(méth)-acrylates répartissables dans l'eau, présentant une teneur en groupes ammonium tertiaires et/ou quaternaires liés chimiquement de 70 à 500 méq pour 100 g de polymère, obtenus à partir de produits de réaction de copolymères de styrène, de méthacrylate de méthyle, de méthacrylate de glycidyle et éventuellement d'acrylate de n-butyle avec 5 à 40 % en poids d'acides gras insaturés et 5 à 25 % en poids de diéthylamine ou d'acétate de diméthyl-(1-hydroxyéthyl)-ammonium, tous les pourcentages en poids étant rapportés au poids total du polymère présent dans chaque cas, des microbicides, de l'eau et éventuellement des solvants organiques ainsi que des adjuvants et additifs connus dans la technologie des laques et vernis.

7. Utilisation de la formulation de microbicide contenant de l'eau et diluable à l'eau selon la revendication 6, éventuellement sous forme diluée, pour appliquer un traitement microbicide sur des matières et matériaux techniques.